# EUROPEAN PATENT APPLICATION

(11) **EP 1 462 213 A1**
(43) Date of publication of application: **29.09.2004**
(21) Application number: 04007169.8
(22) Date of filing: 25.03.2004
(51) Int. Cl.: B23Q 11/00, B23Q 3/155, B23Q 39/02

(54) **A machine tool with an inverted vertical work spindle and an automatic tool changing device**

(30) Priority: 25.03.2003 IT TO20030220
(71) Applicant: Famar S.r.l., 10051 Avigliana (Torino) (IT)
(72) Inventor: Marinello, Fausto Giuseppe, 10090 VALGIOIE (IT); Crivellin, Lorenzo, 10051 Avigliana (IT)
(74) Representative: Quinterno, Giuseppe

(57) **Abstract**

A machine tool (10) is described, in particular for turning, including: a stationary base (12) defining a working zone (14); a work spindle (16) rotatable about a vertical axis, the spindle extending into the working zone (14) from above and being movable vertically and along at least one horizontal direction relative to the base (12); and a first tool-carrier (20) extending into the working zone for positioning a tool (18) relative to the piece being worked. The machine (10) also comprises an automatic tool-changing device including: at least one second tool-carrier (20) arranged outside the working zone (14) and able to receive a new tool (18); a driving unit (22) operable to bring the second tool-carrier (20) into the working zone (14) and the first tool-carrier (20) out of the working zone (14) when it is necessary to use the new tool carried by the second tool-carrier; and a tool magazine (24) positioned outside the working zone (14) near the second tool-carrier (20) and arranged to automatically replace the tool carried by the second tool-carrier with a new tool, in such a way that the tool-changing operation can be carried out during working.

## Description

The present invention relates to a machine tool including a stationary base defining a working zone, a work spindle rotatable about a vertical axis and extending from above into the working zone, and a tool-carrier supported by the base and extending into the working zone for positioning a tool in relation to the piece to be worked. The invention relates more specifically to a machine tool having a work spindle operable to move vertically and along at least one horizontal direction relative to the base and to the tool-carrier.

Machine tools for turning of the type specified above, commonly known as inverted vertical lathes, are often used these days as they offer a great advantage in that a single system for driving the spindle makes it possible to perform both the movements of the workpiece during working (cutting stroke and feeding stroke) and the steps of gripping and depositing the workpieces without requiring special devices for gripping and moving the workpieces, such as manipulator arms.

Currently, the tool-changing operation (whether this is due to the tool being worn or to its replacement with a different type of tool) requires a lengthy interruption of the working, and therefore involves an increase in the duration of the working cycle since the piece being worked needs to be moved far enough away from the tool-carrier in order to allow the old tool to be removed and the new tool to be fitted.

The object of the present invention is therefore to provide a machine tool with an inverted vertical work spindle that makes it possible to perform the tool-changing operations in a shorter time, whereby these operations no longer have a significant effect on the overall duration of the working cycle.

This and other objects are achieved according to the present invention by a machine tool as defined in the annexed Claim 1.

The invention is based on the idea of providing a machine tool with an inverted vertical work spindle, provided with an automatic tool-changing device comprising:
a pair of tool-carriers which can be positioned alternatively the one within the working zone for supporting the tool in use during the working and the other outside the working zone in order to allow the tool carried thereon to be changed without interrupting the working in progress;
a driving unit operable to reverse the positions of the two tool-carriers when it is necessary to replace a worn tool or to use a different type of tool; and
a tool magazine disposed adiacent to the tool-carrier which is outside the working zone, the said magazine being provided with means for automatically removing the tool to be replaced from the tool-carrier and for fitting the new tool on the tool-carrier.

According to a preferred embodiment of the invention, the driving unit includes a drum rotatable about a vertical axis of rotation and carrying in diametrically opposite positions the two tool-carriers and a motor assembly operable to rotate the drum by a half turn (180°) during the tool-changing phase, in order to bring the tool-carrier carrying the new tool into the working zone and to take the tool-carrier carrying the tool to be replaced out of the working zone.

According to another aspect of the invention, each of the two tool-carriers can be of a fixed type or can be mounted on a spindle arranged to cause the tool-carrier to rotate about its own axis of rotation. In this second case, clearly, by fitting a milling tool to the tool-carrier and causing the tool to rotate about its own axis it is possible to use the machine also for performing milling operations.

The characteristics and the advantages of the invention will become apparent from the detailed description which follows, given purely by way of non-limitative example, with reference to the appended drawings, in which:
Figure 1 is a schematic side elevation view of a machine tool with an inverted vertical work spindle provided with an automatic tool-changing device according to the present invention;
Figure 2 is a plan view of the machine of Figure 1;
Figure 3 is a partially sectioned, side elevation view which shows in detail a rotatable, twin tool-carrier driving unit forming part of the automatic tool-changing device of the machine of Figure 1; and
Figure 4 is a schematic plan view of the driving unit of Figure 3.

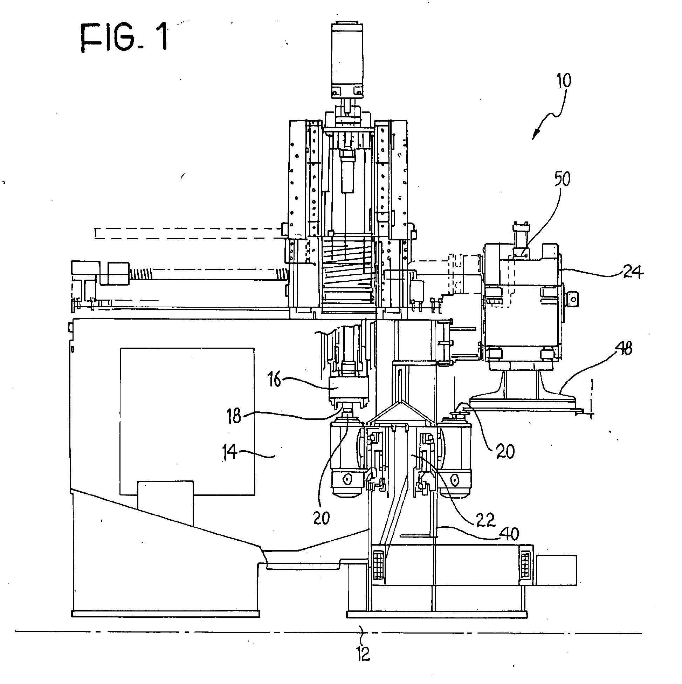

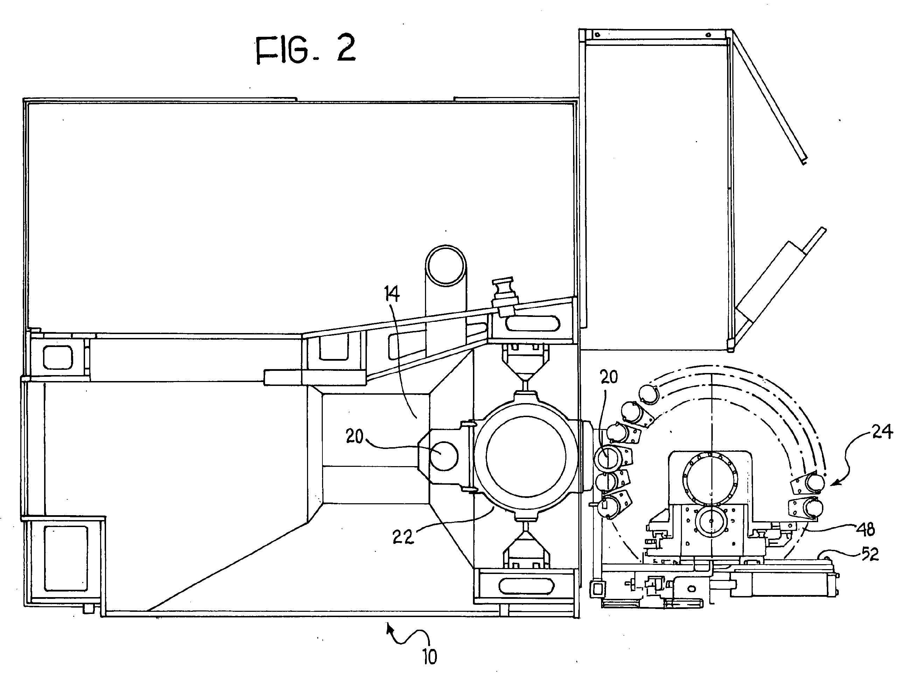

With reference to Figures 1 and 2, a machine tool of per-se-known general structure, is indicated 10, the machine including a stationary base 12 defining a working zone 14 and a work spindle 16 rotatable about a vertical axis and extending into the working zone from above. A tool 18 is held in a fixed position within the working zone, while the work spindle 16 is arranged to be moved both vertically and in at least one horizontal direction, so as to perform the cutting and feeding movements required in order to carry out the turning operations on the piece being worked.

According to the invention, the machine 10 is provided with an automatic tool-changing device which basically comprises a pair of tool-carriers 20, a driving unit 22 operable to control the position of the tool-carrier 20 and a tool magazine 24.

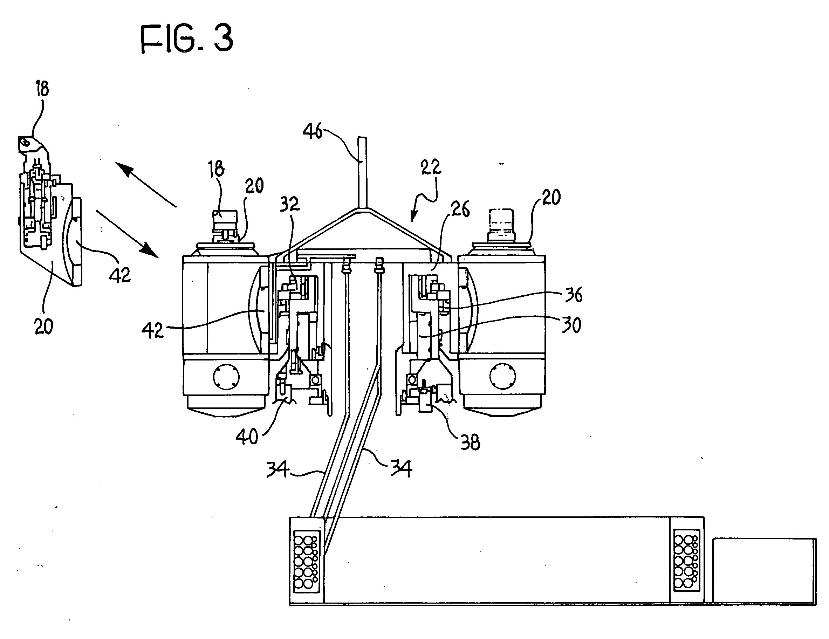

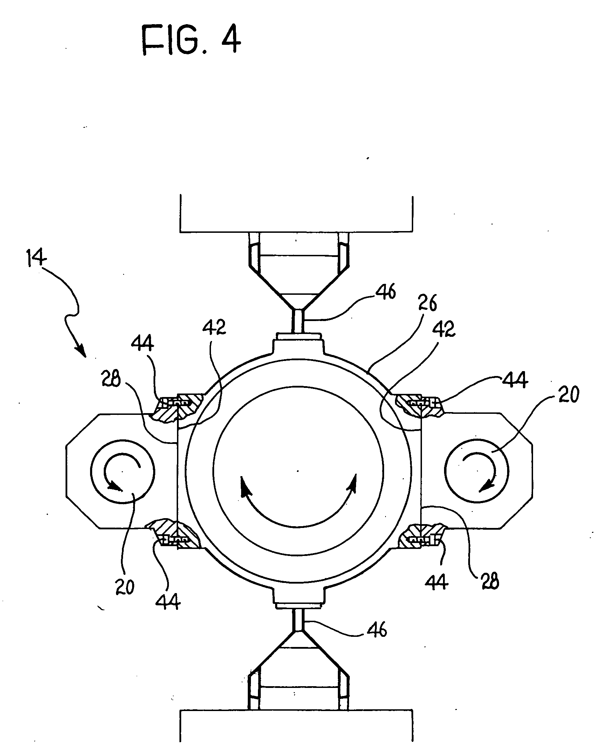

With reference in particular to Figures 3 and 4, the driving unit 22 includes a drum 26 rotatable about a vertical axis and provided with diametrically opposite attachment flanges 28 for securing the tool-carriers 20, and a motor 30 operable to rotate the drum 26 by half a turn each time it is necessary to change a tool. In the embodiment illustrated, the drum 26 is made as the rotor of an integrated electric motor and is supported for rotation on a thrust bearing 32. In order to prevent the electric cables connected to the motor (indicated 34 in Figure 3) from twining as a result of successive rotations of the drum/rotor 26, the motor is arranged to rotate the drum/rotor alternately clockwise and anti-clockwise. The motor is controlled by an electronic control unit (known per se and not shown) which manages the operation of the machine.

There are also provided a brake 36 for locking the drum 26 once it has reached the desired position (rotation through 180°) and an angular position sensor 38, such as a phonic wheel, for suppling the aforesaid electronic control unit with a signal indicating the angular position of the drum, on the base of which signal the unit can control the motor 30 and the brake 34.

Both the brake 36 and the angular position sensor 38 are of per-se-known type and will therefore not be illustrated in detail. The same applies to the motor 30.

The driving unit 22 is mounted on the base 12 of the machine by means of a support structure 40, partially illustrated in Figure 3.

Advantageously, in order to make it possible for the machine to carry out also machining operations other than turning (although the machine is primarily intended for use in turning), the tool-carrier 20 is made as a vertical-axis spindle, provided in per-se-known manner with an electric motor operable to set the tool 18 (a milling tool for example) in rotation about its own axis. When a turning tool is being used, the tool is prevented from rotating by a mechanical locking device (known per se and not shown).

As shown in the top left of Figure 3, instead of a tool-carrier 20 in the form of a spindle it is however possible to fit a fixed tool-carrier of a conventional type to the drum 26, an arrangement obviously less expensive than the above.

The replacement of a tool-carrier of one type with one of the other type does not require lengthy and difficult operations, since both types of tool-carrier have an attachment portion 42 which can be coupled and secured (by screws 44, shown in Figure 4, for example) to both the attachment flanges 28 of the drum 26.

Advantageously, a protection screen 46 is fitted on the driving unit 22 of the tool-carrier 20 for separating the working zone 14 from the external environment, thereby preventing chippings of material or splashes of lubricating and cooling fluid from being projected outwards.

Returning to Figures 1 and 2, the tool magazine 24 is mounted adjacent the tool-carrier 20 disposed outside the working zone 14. In the embodiment illustrated, the magazine 24 includes a turntable 48 rotatable about a vertical axis and carrying a plurality of replacement tools at its circumferential periphery. The tool-carrier turntable 48 can be driven to rotate by a motor 50 in such a way as to position the desired replacement tool close to the tool-carrier 20 disposed outside the working zone and carrying the tool to be replaced. The turntable 48 and motor 50 assembly is mounted projecting from horizontal guides 52 (Figure 2) so that it can be moved towards or away, in an essentially radial direction, with respect to the tool-carrier 20 carried by the driving unit 22.

As will easily be understood in the light of the above description, the tool-changing device of the invention makes it possible to change a very large number of tools without introducing dead times into the working cycle, since the tool-changing operation itself is carried out on the inactive tool-carrier, that is on the one disposed outside the working zone, while the machine continues working with the tool fitted on the other tool-carrier. The only dead time is that required in order to reverse the positions of the two tool-carriers by rotating the drum 26 of the driving unit through 180°. However this time is very short (less than one second) and therefore has no significant effect on the overall duration of the working cycle.

Naturally, the principle of the invention remaining unchanged, the embodiments and manufacturing details may vary widely from those described and illustrated purely by way of non-limitative example.

For example, although the arrangement providing for the use of two tool-carriers is the most advantageous and simplest to produce, it is however possible to envisage the use of a higher number of tool-carriers, by suitably modifying the driving unit 22.

## Claims

1. A machine tool, in particular for turning, including:
a stationary base (12) defining a working zone (14);
a work spindle (16) rotatable about a vertical axis, the spindle extending into the working zone (14) from above and being movable vertically and along at least one horizontal direction with respect to the base (12); and
a first tool-carrier (20) extending into the working zone for positioning a tool (18) relative to the piece being worked;
**characterised in that** it also includes an automatic tool changing device including:
at least one second tool-carrier (20) arranged outside the working zone (14) and able to receive a new tool (18);
a driving unit (22) for bringing the second tool-carrier (20) into the working zone (14) and the first tool-carrier (20) out of the working zone (14) when it is necessary to use the new tool carried by the second tool-carrier; and
a tool magazine (24) positioned outside the working zone (14) near the second tool-carrier (20) and arranged to automatically replace the tool carried by the second tool-carrier with the new tool,
in such a way that the tool-changing operation can be carried out during working.

2. A machine tool according to Claim 1, **characterised in that** the assembly of tool-carriers (20) is arranged to rotate as a rigid body so as to bring the said at least one second tool-carrier into the working zone (14) and the said first tool-carrier out of the working zone and vice-versa.

3. A machine tool according to Claim 2, **characterised in that** the driving unit (22) includes a drum (26) rotatable about a vertical axis and carrying the said first and at least one second tool-carrier (20).

4. A machine tool according to Claim 3, **characterised in that** the tool-changing device includes first and second tool-carriers (20) mounted in diametrically opposite positions on the drum (26).

5. A machine tool according to Claim 3, **characterised in that** the driving unit (22) includes an electric motor (30) operable to control rotation of the drum (26).

6. A machine tool according to Claim 5, **characterised in that** the drum (26) constitutes the stator of the electric motor (30).

7. A machine tool according to Claim 3, **characterised in that** the driving unit (22) includes a locking device (36) for locking the drum (26) in the desired angular position.

8. A machine tool according to Claim 3, **characterised in that** the driving unit (22) includes sensor means (38) for providing a signal indicating the angular position of the drum (26), movement of the drum being controlled on the basis of this signal.

9. A machine tool according to Claim 3, **characterised in that** the drum (26) of the driving unit (22) includes a protective screen (46) for separating the working zone (14) from the external environment.

10. A machine tool according to any preceding Claim, **characterised in that** at least one of the said first and second tool-carriers (20) is made as a spindle rotatable about a vertical axis, thereby making it possible also to use a milling tool.
